# EUROPEAN PATENT APPLICATION

(11) **EP 3 540 670 A1**
(43) Date of publication of application: **18.09.2019**
(21) Application number: 19160514.6
(22) Date of filing: 04.03.2019
(51) Int. Cl.: G06Q 20/20, G07G 1/00, G07G 3/00

(54) **COMMODITY SALES DATA REGISTRATION DEVICE AND COMMODITY SALES DATA REGISTRATION METHOD**

(30) Priority: 05.03.2018 JP 2018038173
(71) Applicant: Toshiba Tec Kabushiki Kaisha, 141-8562 Tokyo (JP)
(72) Inventor: Taya, Yusuke, Tokyo, 141-8562 (JP)
(74) Representative: Hoffmann Eitle

(57) **Abstract**

A point-of-sale terminal for a checkout system including multiple transaction settlement accounting devices includes a scanner to identify and register an item being purchased by a customer and generate sales transaction information including each registered item identified by the scanner. A communication interface is provided for transferring sales transaction information to the transaction settlement accounting devices. Each transaction settlement accounting device is of an assigned color that is different for the other transaction settlement accounting devices. A visual display device on the point-of-sale terminal is provided for presenting a color to the customer that matches the assigned color of transaction settlement accounting device to which the sales transaction information is transferred.

## Description

### CROSS-REFERENCE TO RELATED APPLICATION

This application is based upon and claims the benefit of priority from Japanese Patent Application No. 2018-038173, filed in March 5, 2018, the entire contents of which are incorporated herein by reference.

### FIELD

Embodiments described herein relate generally to a commodity sales data registration device and a commodity sales data registration method.

### BACKGROUND

As a system that is installed in retail stores registering items being purchased by customers and handling settlement of sales transaction, there is a type of system in which item registration occurs at registration point of sales (POS) terminal and then transaction data is transferred to a settlement POS terminal for payment processing. In such a system, there may be several possible settlement POS terminals to which transaction data can be sent. In order to inform the customer of the transfer destination, a POS system that causes a lamp of the settlement POS terminal to be turned on at the destination terminal is sometimes utilized.

In such a POS system of the related art, an operator (e.g., store clerk) who operates the registration POS terminal, issues an instruction such as "please settle in the settlement device with the lamp turned on with the [predetermined color name]" to the customer. Accordingly, the customer then searches for the appropriate settlement device by comparing the color name heard from the operator with the lighting color of the lamps of the various settlement devices. At this time, since the customer needs to compare the named color with the lighting color of the lamp, there are problems in that the searching by arbitrary color may be difficult to identify the intended settlement device. Particularly, there is a case in which color perceptions of individuals differ, and the actual lamp color may be different from the perceived color depending on the person. For example, some people are substantially color blind. For such a person, a task of searching for lamps matching the named color may be very difficult.

### SUMMARY OF THE INVENTION

One of the objects of the present invention is to improve prior art techniques and overcome at least some of the prior art problems as for instance above illustrated.

According to a first aspect of the invention, it is provided a point-of-sale terminal in a checkout system including a plurality of transaction settlement accounting devices separate from the point-of-sale terminal, the point-of-sale terminal comprising: a scanner to identify and register an item being purchased by a customer in a sales transaction and generate sales transaction information including each registered item identified by the scanner; a communication interface for transferring sales transaction information to a plurality of transaction settlement accounting devices, each transaction settlement accounting device being of an assigned color that is different for each other transaction settlement accounting device in the plurality; and a visual display device for presenting a color to the customer that matches the assigned color of a selected one of the plurality of transaction settlement accounting devices to which the sales transaction information for the customer is transferred.

Optionally, in the point-of-sale terminal according to the first aspect of the invention, the visual display device comprises a lighting device on the point-of-sale terminal that can emit light at a color substantially matching each assigned color of the plurality transaction settlement accounting devices, and configured to emit light substantially matching the assigned color of the selected one of the plurality of transaction settlement accounting devices after the communication interface transfers the sales transaction information.

Optionally, in the point-of-sale terminal according to the first aspect of the invention, the lighting device is an LED device in a position visible by both the customer and an operator of the scanner.

Optionally, in the point-of-sale terminal according to the first aspect of the invention, the lighting device is disposed on a pole adjacent to the scanner.

Optionally, in the point-of-sale terminal according to the first aspect of the invention, the visual display device comprises a first display screen directed towards a customer side of the scanner and a second display screen directed toward an operator side of the scanner, and the assigned color of the selected one of the transaction settlement devices is displayed on the first display screen and the second display screen after the sales transaction information is transferred.

Optionally, in the point-of-sale terminal according to the first aspect of the invention, an entirety of a background portion of the first display screen and an entirety of a background portion of the second display screen displays the assigned color of the selected one of the transaction settlement devices.

Optionally, in the point-of-sale terminal according to the first aspect of the invention, the visual display device further comprises a lighting device that can emit light at a color substantially matching each assigned color of the plurality transaction settlement accounting devices and is configured to emit light substantially matching the assigned color of the selected one of the plurality of transaction settlement accounting devices after the communication interface transfers the sales transaction information.

Optionally, in the point-of-sale terminal according to the first aspect of the invention, the lighting device is an LED device in a position visible by both the customer and an operator of the scanner.

Optionally, in the point-of-sale terminal according to the first aspect of the invention, the lighting device is disposed on a pole adjacent to the scanner.

Optionally, the point-of-sale terminal according to the first aspect of the invention further comprises an operator display screen including a touch panel, wherein selection of the selected one of the plurality of transaction settlement accounting devices is made by an operator via the touch panel.

According to a second aspect of the invention, it is provided a checkout system, comprising: a point-of-sale terminal at which an operator registers items in a sales transaction for a customer; and a plurality of transaction settlement accounting devices separate from the point-of-sale terminal, configured to permit the customer to settle the sales transaction by one or more methods of payment, each transaction settlement accounting device being assigned a different color, and each transaction settlement accounting device being predominately painted with its respective assigned color, wherein the point-of-sale terminal includes a scanner to identify and register an item being purchased by the customer and generate sales transaction information including each registered item identified by the scanner; a communication interface for transferring sales transaction information to the plurality of transaction settlement accounting devices; and a visual display device for presenting a color to the customer that matches the assigned color of a selected one of the plurality of transaction settlement accounting devices to which the sales transaction information for the customer is transferred.

Optionally, in the checkout system according to the second aspect of the invention, the visual display device comprises a lighting device on the point-of-sale terminal that can emit light at a color substantially matching each assigned color of the plurality transaction settlement accounting devices, and configured to emit light substantially matching the assigned color of the selected one of the plurality of transaction settlement accounting devices after the communication interface transfers the sales transaction information.

Optionally, in the checkout system according to the second aspect of the invention, the lighting device is an LED device in a position on the point-of-sale terminal visible by both the customer and the operator of the point-of-sale terminal.

Optionally, in the checkout system according to the second aspect of the invention, the lighting device is disposed on a pole attached to the point-of-sale terminal.

Optionally, in the checkout system according to the second aspect of the invention, visual display device comprises a first display screen directed towards a customer side of the point-of-sale terminal and a second display screen directed toward an operator side of the point-of-sale terminal, and the assigned color of the selected one of the transaction settlement devices is displayed on the first display screen and the second display screen after the sales transaction information is transferred.

Optionally, in the checkout system according to the second aspect of the invention, an entirety of a background portion of the first display screen and an entirety of a background portion of the second display screen display the assigned color of the selected one of the transaction settlement devices.

Optionally, in the checkout system according to the second aspect of the invention, the visual display device further comprises a lighting device on the point-of-sale terminal that can emit light at a color substantially matching each assigned color of the plurality transaction settlement accounting devices and is configured to emit light substantially matching the assigned color of the selected one of the plurality of transaction settlement accounting devices after the communication interface transfers the sales transaction information.

Optionally, in the checkout system according to the second aspect of the invention, the lighting device is a LED device in a position visible by both the customer and an operator of the scanner.

Optionally, the checkout system according to the second aspect of the invention further comprises an operator display screen including a touch panel, wherein selection of the selected one of the plurality of transaction settlement accounting devices is made by the operator via the touch panel.

According to a third aspect of the invention, it is provided a commodity sales data registration method, comprising: performing registration of a commodity being purchased by a customer at point-of-sale terminal and thereby generating sales transaction information; transferring the sales transaction information to a selected transaction settlement accounting device from a plurality of transaction settlement accounting devices communicably connected to the point-of-sale terminal, each of the transaction settlement accounting devices being assigned a different color; and visually presenting the color assigned to the selected one of the transaction settlement accounting devices to the customer.

### DESCRIPTION OF THE DRAWINGS

FIG. 1 depicts a POS system according to an embodiment.
FIG. 2 depicts a store layout of a POS terminal and an accounting device.
FIG. 3A depicts a POS terminal as viewed from an operator side.
FIG. 3B depicts a POS terminal as viewed from a customer side.
FIG. 4 depicts an accounting device.
FIG. 5 schematically depicts a hardware configuration of a POS system.
FIG. 6 schematically depicts a functional configuration of a POS system.
FIG. 7 is a flowchart depicting aspects of processes performed by a POS system.
FIGS. 8A and 8B are diagrams illustrating another example of presenting a transfer destination of commodity registration information. FIG. 8A is an example of a display screen of a customer side monitor. FIG. 8B is an example of a display screen of an operator side monitor.

### DETAILED DESCRIPTION

Embodiments provide a commodity sales data registration device and a commodity sales data registration method capable of easily guiding a customer to an accounting device for sales transaction settlement.

In general, according to one embodiment, a point-of-sale terminal for a checkout system including a plurality of transaction settlement accounting devices separate from the point-of-sale terminal includes a scanner to identify and register an item being purchased by a customer in a sales transaction and generate sales transaction information including each registered item identified by the scanner. A communication interface is provided for transferring sales transaction information to a plurality of transaction settlement accounting devices. Each transaction settlement accounting device is of a particularly assigned color that is different for each other transaction settlement accounting device in the plurality. A visual display device is provided for presenting a color to the customer that matches the assigned color of a selected one of the plurality of transaction settlement accounting devices to which the sales transaction information for the customer is transferred.

Hereinafter, example embodiments will be described with reference to the accompanying drawings. In the following description, an example in which a commodity sales data registration device of an embodiment is used in a semi-self type POS system in a retail store is described.

### Description of Overall Configuration of POS System

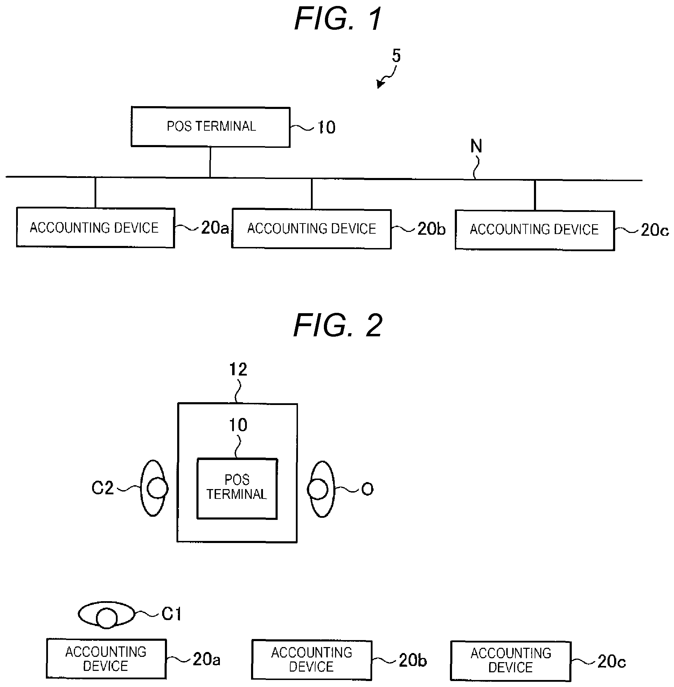

FIG. 1 is a diagram illustrating an example of a system configuration of a POS system 5 according to an embodiment. As illustrated in FIG. 1, the POS system 5 includes one POS terminal 10 and three accounting (settlement devices 20a, 20b, and 20c. The POS terminal 10 and the accounting devices 20a, 20b, and 20c are connected to be communicated with each other via a network N such as a local area network (LAN). The POS system 5 is an example of a checkout system. In addition, the POS terminal 10 is an example of the commodity sales data registration device. The number of the accounting devices 20a, 20b, and 20c connected to the POS terminal 10 is not limited three.

FIG. 2 is a diagram illustrating an example of a layout of the POS terminal 10 and the accounting devices 20a, 20b, and 20c in a shop.

As illustrated in FIG. 2, the POS terminal 10 and the accounting devices 20a, 20b, and 20c are arranged in a separated state in a predetermined area in the shop. For example, the POS terminal 10 is installed on a table shape work table 12. In the POS terminal 10, a customer C2 performs a registration process of the purchased commodity by being operated by an operator O who is a clerk.

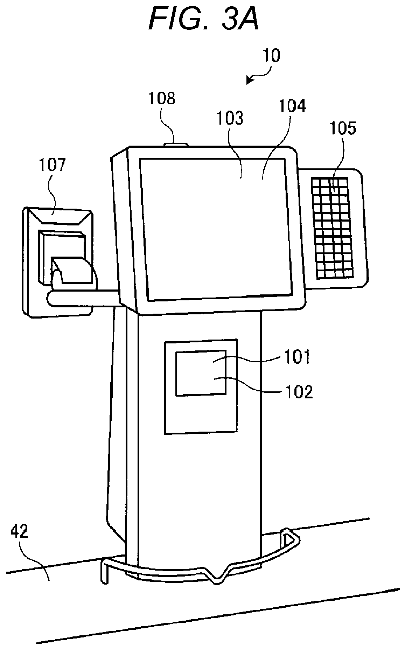

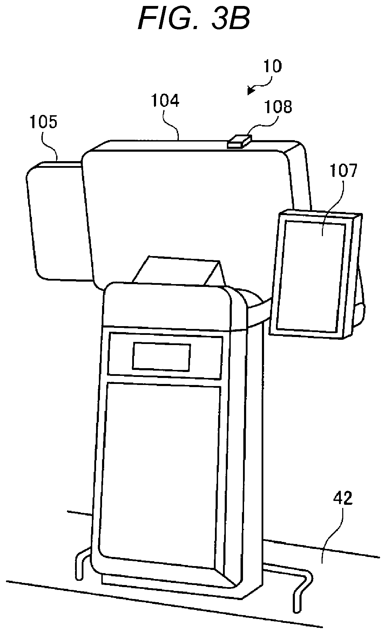

In a layout of FIG. 2, the customer C2 puts the purchased commodity in a basket or the like and carries it to the work table 12. The operator O causes a scanner 101 to read each commodity brought in by the customer C2 (see FIGS. 3A and 3B), and inputs a commodity code that can identify the commodity to the POS terminal 10. At this time, the operator O operates the POS terminal 10 in a state where the operator O faces the customer C2 by interposing the work table 12 therebetween. When commodity registration for one transaction is completed, the operator O instructs the completion of the commodity registration by operating a touch panel 103 (see FIGS. 3A and 3B) or a keyboard 105 (see FIGS. 3A and 3B).

The POS terminal 10 transfers the commodity registration information according to the customer C2 including commodity information (commodity codes, and names, unit prices, and the number of commodities) for one transaction, the total amount, and the like, to one of the accounting devices 20a, 20b, and 20c. For example, the POS terminal 10 transfers the commodity registration information to one of accounting devices not currently be used by another customer from among the settlement devices 20a, 20b, and 20c. This selection may be performed by the decision of operator O or may be automatically performed by the POS terminal 10 by receiving operation states of the accounting devices 20a, 20b, and 20c.

For example, as illustrated in FIG. 2, when a customer C1 performs the accounting process in the accounting device 20a, it is desirable that the commodity registration information of the customer C2 be transferred to the accounting device 20b or the accounting device 20c.

Then, the customer C2 puts the items for which registration has been completed in the basket or the like, carries the registered items to the accounting device 20b to which the commodity registration information was transferred, and performs accounting (settlement) of a commodity purchase price in the accounting device 20b.

### Description of Configuration of POS Terminal

FIGS. 3A and 3B are perspective diagrams illustrating an example of an external of the POS terminal 10, FIG. 3A is an external view of the POS terminal 10 viewed from an operator O side. In addition, FIG. 3B is an external view of the POS terminal 10 viewed from a customer side. As illustrated in FIG. 3A and FIG. 3B, the POS terminal 10 is installed on the upper surface of the work table 42 and includes a vertical type scanner 101 with a reading window 102. The scanner 101 includes an imaging unit disposed near the reading window 102.

In addition, the POS terminal 10 includes an operator side monitor 104 in which the touch panel 103 is attached and the keypad 105, on the upper portion of the scanner 101. On the operator side monitor 104, a commodity name, a price, and the like of the commodity imaged by the imaging unit of the scanner 101 are displayed. The operator side monitor 104 is an example of an operator side display device. In addition, the touch panel 103 and the keypad 105 assist in inputting of information for the items being registered.

On the upper portion of the operator side monitor 104, a light emitting diode (LED) 108 is installed. The LED 108 emits light with a color specified by the POS terminal 10. The light from the LED 108 is visible from both sides of the operator O side and the customer side. The LED 108 has a color that allows uniquely specify the accounting devices 20a, 20b, and 20c to which the registered result is being (or has been) transferred to by the POS terminal 10. The LED 108 is an example of a lighting device. In addition, the LED 108 may be a light emitting element other than an LED as long as element can emit light for the unique color assigned to each of the accounting devices 20a, 20b, and 20c.

On the left side of the POS terminal 10 as viewed from the operator O side, a customer side monitor 107 is provided facing a customer C2 side. The customer side monitor 107 is an example of a customer side display device. The names, the unit prices, the number, the total amount, and the like of commodities registered by the POS terminal 10, are displayed on the customer side monitor 107.

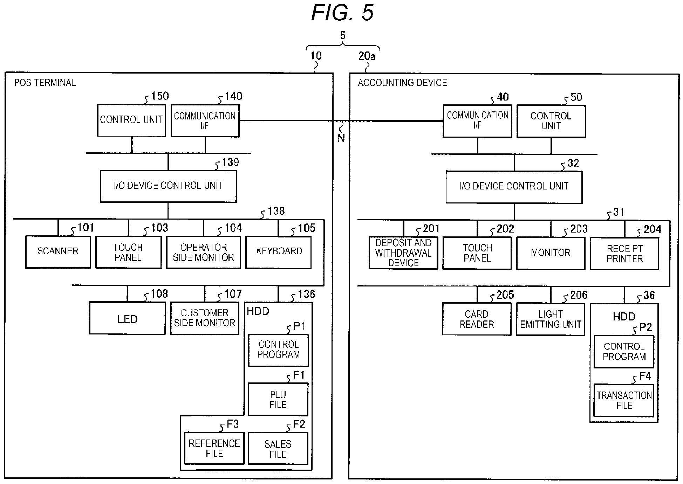

The POS terminal 10 may identify items included in images imaged by the imaging unit of scanner 101 using generic object recognition or based on reading of a code symbol, such as a barcode and a QR code®, or the like attached to the item. Specifically, the POS terminal 10 refers to a PLU file F1 (see FIG. 5) associating the commodity name, the price, and the like of the commodity with a commodity code for identifying each commodity sold in the shop, and uniquely specifies the commodity corresponding to the commodity code included in the read code symbol.

Generic object recognition is described in the following literature: Keiji Yanai, "The Present and Future of General Object Recognition", The Transactions of the Information Processing Society, Vol. 48, No. SIG 16 [Search January 5, 2018], Internet <URL: http: //mm.cs.uec.ac.jp/IPSJ-TCVIM-Yanai.pdf>

In addition, the POS terminal 10 displays a screen for receiving inputs, such as product identification confirmations and the number of instances of the identified commodity in the transaction, on the operator side monitor 104. Accordingly, the POS terminal 10 performs the registration of the identified commodity. Here, registration means that a result obtained by associating the commodity information of the commodity read from the PLU file F1 with the number of pieces (the number of purchased commodities) and the like of the commodity being stored in a storage device (RAM and HDD 136 (see FIG. 5)) of the POS terminal 10.

### Description of Configuration of Accounting Device

The accounting devices 20a, 20b, and 20c perform the settlement accounting process based on the commodity registration information registered by the POS terminal 10. Since the accounting devices 20a, 20b, and 20c have the same configuration, a configuration of the accounting device 20a will be described as an example.

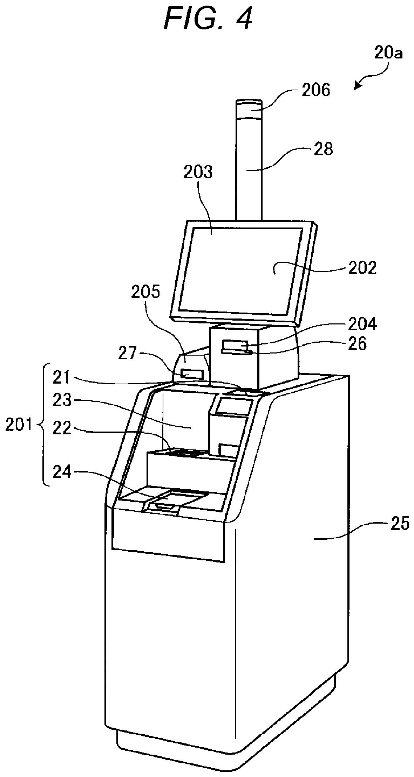

FIG. 4 is an external perspective view of the accounting device 20a. As illustrated in FIG. 4, on the upper portion of a case 25, the accounting device 20a includes a deposit and withdrawal device 201, a touch panel 202, a monitor 203, a receipt printer 204, a card reader 205, and a light emitting unit 206.

The case 25 is coated with a unique color assigned to the accounting device 20a so as to uniquely specify the accounting device 20a from among the other accounting devices. That is, in this example, the entire case 25 for each of the accounting devices 20a, 20b, and 20c is coated with a different, distinguishing color. Here, the case 25 of the accounting device 20a is yellow, the case 25 of the accounting device 20b is green, and the case 25 of the accounting device 20c is blue; however, any colors may be utilized so long as the accounting devices 20a, 20b, and 20c are coated with different colors.

The deposit and withdrawal device 201 includes a coin slot 21, a bill slot 22, a bill outlet 23, and a coin outlet 24. The deposit and withdrawal device 201 stores a bill (paper currency) inserted into the bill slot 22 in an internal bill storage unit. In addition, the deposit and withdrawal device 201 stores a coin inserted into the coin slot 21 in an internal coin storage unit. Accordingly, the deposit and withdrawal device 201 pays out bills for making change via the bill outlet 23 in response to a change payout request from a control unit 50 (see FIG. 5) . In addition, the deposit and withdrawal device 201 pays out coins for making change via the coin outlet 24 in response to the change payout request from the control unit 50.

The monitor 203 includes the touch panel 202 thereon. For example, the monitor 203 is configured with the liquid crystal panel, and displays information on the accounting such as the total amount of one transaction as images and text. The touch panel 202 outputs information corresponding to a contact position to the control unit 50.

The receipt printer 204 includes a printing unit and a receipt issue port 26. The receipt printer 204 issues a receipt from the receipt issue port 26 in accordance with an instruction of the control unit 50.

The card reader 205 reads and writes information from and to a credit card, a membership card, or the like inserted in a card insertion slot 27.

The light emitting unit 206 is installed at an upper end of a display pole 28, and emits light when an abnormality occurs in an operation of the accounting device 20a or the like. For example, the light emitting unit 206 includes a light emitting diode (LED) of emitting blue and an LED of emitting red. The light emitting unit 206 may use an LED of a color different from the blue and the red, and may use a different light emitting element. Since the light emitting unit 206 is provided on the upper end of the display pole 28, it is easy for the operator O of the POS terminal 10 and other store clerks at various locations to see the light emitting unit.

The customer C2 performs payment by cash, credit card, electronic money, or the like by operating the accounting device 20a. The accounting device 20a displays the total amount for a transaction based on the commodity registration information received from the POS terminal 10, and controls the settlement process according to the total amount due. The commodity registration information includes information such as the total amount due for the transaction, the registered commodity information, a device number for the POS terminal 10 that transmitted the data, and the name of assigned operator of the transmitting POS terminal 10. The commodity registration information may include other information required for printing the receipt. For example, the commodity registration information may include promotional information or the like to be printed on the receipt.

Although it is described that the case 25 of the accounting device 20a is coated with the unique color assigned to the accounting device 20a, another portion of the accounting device 20a, for example, the display pole 28 may be coated with the assigned color for the accounting device 20a instead of the case 25.

### Description of Hardware Configuration of POS System

Next, a hardware configuration of the POS terminal 10 and the accounting device 20a will be described. FIG. 5 is a block diagram illustrating an example of a hardware configuration of the POS terminal 10 and the accounting device 20a. As described above, the POS terminal 10 is also connected to the accounting devices 20b and 20c. The accounting devices 20a, 20b, and 20c have the same hardware configuration. Therefore, for simplicity of explanation, only the accounting device 20a is described in FIG. 5.

First, a hardware configuration of the POS terminal 10 will be described. As described in FIG. 5, the POS terminal 10 includes a control unit 150. The control unit 150 includes a central processing unit (CPU) performing the registering, a read-only memory (ROM), a random access memory (RAM)), and the like. The ROM stores various programs executed by the CPU, various data, and the like. The RAM temporarily stores data and the program (or portions thereof) when the program is executed by the CPU. In addition, the RAM stores various screen display data to be displayed on the operator side monitor 104 and the customer side monitor 107. That is, the control unit 150 includes a general computer configuration.

The control unit 150 performs data communication with the accounting device 20a connected to a network N via a communication interface (I/F) 140. In addition, the control unit 150 is connected to the scanner 101 and the touch panel 103 via an input and output (I/O) device control unit 139 and an internal bus 138. In addition, the control unit 150 is connected to the operator side monitor 104, the keypad 105, the customer side monitor 107, the LED 108, and a hard disk drive (HDD) 136 via an I/O device control unit 139 and the internal bus 138.

Various operation buttons such as a numeric button, a subtotal button, and a transfer button are arranged in the touch panel 103 or the keypad 105. When a plurality of the same commodities are purchased, the numeric button is an operation button for receiving an instruction for setting the number of commodities. The subtotal button is an operation button for completing commodity reading for a transaction, calculating the total amount for the transaction, and generating commodity registration information including the total amount due for the transaction. The transfer button is an operation button for receiving a transfer instruction to transfer the generated commodity registration information to one of the accounting devices 20a, 20b, and 20c. How these buttons are disposed on the touch panel 103 and/or the keypad 105 can be arbitrarily designed.

As an operation example, the operator O displays the total amount due for a transaction on the customer side monitor 107 by pressing the subtotal button, and transfers the commodity registration information to one of the accounting devices 20a, 20b, and 20c by pressing the transfer button. Specifically, the operator O selects an available accounting device from the accounting devices 20a, 20b, and 20c, and instructs transfer of the commodity registration information to the selected one of the accounting devices 20a, 20b, and 20c. For example, when the operator O selects the accounting device 20a as a transfer destination, the commodity registration information is transferred to the accounting device 20a if that the accounting device 20a is in an activated state.

After the transfer button is pressed, the POS terminal 10 completes the registering of the current customer C2, and proceeds to the registering on the next customer. The customer C2 for which the registering has been completed, next performs the settlement by being transferred from the POS terminal 10 to the accounting device 20a. The accounting device 20a waits for the start of the settlement processing until receiving the commodity registration information of the customer C2.

A control program PI, the PLU file F1, a sales file F2, and a reference file F3 are stored in the HDD 136.

The control program P1 is a program file of causing various functions of the POS terminal 10 to be performed when executed by the control unit 150.

The PLU file F1 stores the commodity code uniquely assigned to each commodity in association with information such as the name, price, and commodity classification for the commodity, and the like. In addition, when the POS terminal 10 is configured to specify the commodity by the generic object recognition (object recognition), the PLU file F1 further stores a feature value of each commodity and/or a reference image, or the like. The feature value is data such as a color tone value of the commodity, texture of a surface of the commodity, and the like, which is read from a reference image of the commodity or the like.

The sales file F2 is a file for storing the commodity registration information generated by the POS terminal 10.

The reference file F3 is a file for storing color names for indicating the unique colors assigned to the accounting devices 20a, 20b, and 20c connected to the POS terminal 10. For example, the reference file F3 associates the accounting device 20a with "yellow", the accounting device 20b with the "green", and the accounting device 20c with the "blue". The reference file F3 may store other information (for example, each intensity of red, green, blue (RGB) that are three primary colors of color, or the like) for specifying assigned colors, instead of just the color names.

As described in FIG. 5, the accounting device 20a includes the control unit 50. The control unit 50 includes CPU, a ROM and a RAM, and the like. The ROM stores various programs executed by the CPU, various data, and the like. The RAM temporarily stores data and the program (or portions thereof) when the program is executed by the CPU. In addition, the RAM stores various screen display data to be displayed on the monitor 203. That is, the control unit 50 includes a general computer configuration.

The control unit 50 performs data communication with the POS terminal 10 connected to a network N via a communication I/F 40.

In addition, the control unit 50 is connected to the monitor 203 and the touch panel 202 via an I/O device control unit 32 and an internal bus 31. In addition, the control unit 50 is connected to the deposit and withdrawal device 201, the receipt printer 204, the card reader 205, the light emitting unit 206, and an HDD 36 via the I/O device control unit 32 and the internal bus 31.

A control program P2 and a transaction file F4 are stored in an HDD 36. The control program P2 is a program file for causing various controls of the accounting device 20a to be performed when executed by the control unit 50. The transaction file F4 is a data file for storing the commodity registration information received from the POS terminal 10, accounting data generated by the accounting device 20a, and the like is recorded. The transaction file F4 is used as data in which a transaction history is recorded.

### Description of Functional Configuration of POS System

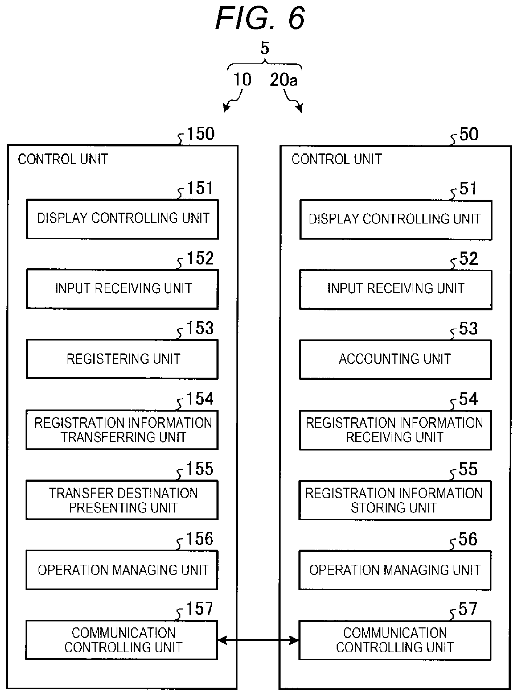

FIG. 6 is a functional block diagram illustrating an example of a functional configuration of the POS system 5.

The control unit 150 loads the control program P1 read from the HDD 136 in the RAM and executes the control program P1 such that a display controlling unit 151, an input receiving unit 152, a registering unit 153, a registration information transferring unit 154, a transfer destination presenting unit 155, an operation managing unit 156, and a communication controlling unit 157, which are illustrated in FIG. 6, are realized as functional units.

The display controlling unit 151 causes the commodity information registered by the POS terminal 10 to be displayed on the operator side monitor 104 and the customer side monitor 107.

The input receiving unit 152 receives various inputs from the scanner 101, the touch panel 103, and the keypad 105. For example, the input receiving unit 152 receives inputs of the commodity code read from a code symbol by the scanner 101. In addition, when the touch panel 103 is touched in conjunction with one of the various screens displayed on the operator side monitor 104, the input receiving unit 152 receives the touch as an input operation. In addition, when the keypad 105 is operated, the input receiving unit 152 receives the pressing of various keys as an input operation.

The registering unit 153 performs the registering of the commodity. Specifically, when the commodity code of the commodity is input via the scanner 101 or the touch panel 103, the registering unit 153 reads the commodity information for the commodity from the PLU file F1. The registering unit 153 detects that the subtotal button is pressed and calculates the total amount due in the transaction and completing the registering of items in the transaction. The registering unit 153 generates the commodity registration information for the transaction.

The registration information transferring unit 154 transfers the commodity registration information to one of the accounting devices 20a, 20b, and 20c. The registration information transferring unit 154 is an example of a transfer unit.

The transfer destination presenting unit 155 reads, from the reference file F3, the color assigned to the accounting device (for example, accounting device 20a) to which the registered result is to be transferred. In addition, the transfer destination presenting unit 155 presents the color matching to the color read from the reference file F3 to the customer and the operator O. The transfer destination presenting unit 155 is an example of a presentation unit. Specifically, the transfer destination presenting unit 155 turns on the LED 108 with a color substantially equal to the color read from the reference file F3. For example, when the transfer destination of the registered result is the accounting device 20a, the transfer destination presenting unit 155 lights LED 108 with the yellow color that is assigned to the accounting device 20a.

The operation managing unit 156 manages the overall operation of the POS terminal 10.

The communication controlling unit 157 controls transmission and reception of various types of information by the POS terminal 10 to/from the accounting device 20a connected via the communication I/F 140. For example, the communication controlling unit 157 transfers the commodity registration information generated by the registering unit 153 to the accounting device 20a.

In addition, the control unit 50 of the accounting device 20a executes the control program P2 by loading the control program P2 read from an HDD 36 in the RAM such that a display controlling unit 51, an input receiving unit 52, an accounting unit 53, a registration information receiving unit 54, a registration information storing unit 55, an operation managing unit 56, and a communication controlling unit 57, which are illustrated in FIG. 6, are realized as functional units.

The display controlling unit 51 generates screen display data, and causes the generated screen display data to be displayed on the monitor 203. For example, the display controlling unit 51 displays a settlement screen or the like provided on the monitor 203. In addition, the display controlling unit 51 displays contents of an error signal on the light emitting unit 206 indicating that an error has occurred in one of (for example, accounting device 20a)the accounting devices 20a, 20b, 20c.

The input receiving unit 52 receives various inputs from the touch panel 202 and the card reader 205. For example, when the touch panel 202 is touched, the input receiving unit 52 receives the input thereof. In addition, the input receiving unit 52 receives information read from a customer credit card or the like by the card reader 205.

The accounting unit 53 performs the transaction settlement accounting according to the commodity registration information. Specifically, the accounting unit 53 performs the settlement accounting to settle the price of the purchased items in the sales transaction based on the commodity registration information transferred from the POS terminal 10.

The registration information receiving unit 54 receives the commodity registration information transferred from the POS terminal 10.

The registration information storing unit 55 stores the commodity registration information received by the registration information receiving unit 54 in the HDD 36 or the like.

The operation managing unit 56 manages the overall operations of the accounting device (for example, accounting device 20a).

The communication controlling unit 57 controls transmission and reception of various types of information to/from the POS terminal 10 connected via the communication I/F 40. For example, the communication controlling unit 57 receives the commodity registration information or the like from the POS terminal 10 connected via the communication I/F 40.

### Process Performed by POS Terminal

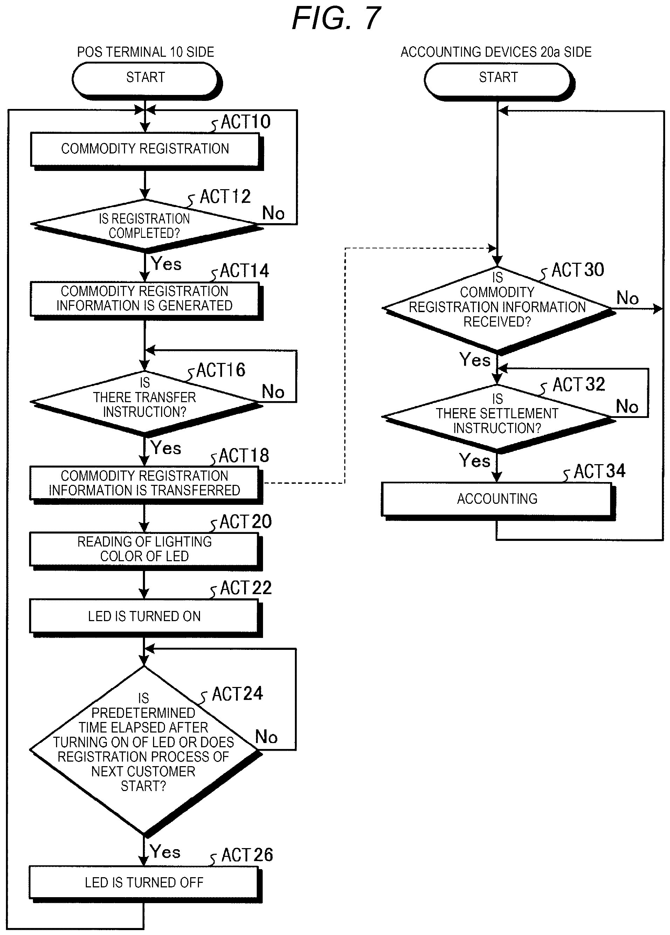

Next, by using FIG. 7, a flow of processing performed by the POS terminal 10 will be described. FIG. 7 is a flowchart illustrating an example of a flow of a series of processes performed by the POS system 5.

First, the flow of the process performed by the POS terminal 10 will be described. The registering unit 153 performs commodity registration (Act 10). Specifically, the registering unit 153 specifies the commodity information by checking commodity codes read by the scanner 101 and/or input via the touch panel 103 by operator O against the PLU file F1. Accordingly, the registering unit 153 registers the specified commodity information as the registered commodity information.

The registering unit 153 determines whether the commodity registration has been completed (Act 12). Specifically, the registering unit 153 determines whether, for example, a subtotal button or the like has been pressed. Accordingly, when it is determined that a subtotal button of the like has been pressed, the registering unit 153 determines that the commodity registration has been completed (Act 12: Yes), and the process proceeds to Act 14. If the subtotal button or the like has not yet been pressed, it is determined that the commodity registration is not completed (Act 12: No), and the registration of the next commodity/item in the sales transaction is performed by returning to Act 10.

In Act 12, once the commodity registration is completed, the registering unit 153 generates the commodity registration information (Act 14).

The registration information transferring unit 154 determines whether there is a transfer instruction for transferring the commodity registration information to one of the accounting devices 20a, 20b, and 20c (Act 16). Specifically, the registration information transferring unit 154 determines whether a transfer button or the like has been pressed, and determines that the transfer instruction has been issued if the transfer button is pressed. When it is determined that a transfer instruction has been received (Act 16: Yes), the process proceeds to Act 18. If i the transfer instruction has not yet been received (Act 16: No), the registration information transferring unit 154 repeats the determination in Act 16 until a time-out event occurs.

The registration information transferring unit 154 transfers the commodity registration information to the selected one from the accounting devices 20a, 20b, and 20c in Act 18. In this explanation example, it is assumed that the commodity registration information is transferred to the accounting device 20a.

Next, the transfer destination presenting unit 155 reads a color (e.g., a lighting color of LED 108) assigned to the accounting device 20a (Act 20), by reference to the reference file F3.

Then, the transfer destination presenting unit 155 causes the LED 108 to lit with the color read from the reference file F3 (Act 22).

The operation managing unit 156 determines whether a predetermined time has elapsed since the LED 108 was turned on or whether the registering for the next customer has started (Act 24). When it is determined that the predetermined time is elapsed or that the registering for the next customer has started (Act 24: Yes), the process proceeds to Act 26. If the predetermined time has not yet elapsed since the LED 108 was lit and the registering for the next customer has not yet started (Act 16: No), the processing repeats Act 24.

Once it is determined Yes in Act 24, the transfer destination presenting unit 155 causes the LED 108 to be turned off in Act 26. Then, the POS terminal 10 returns to Act 10 and performs the registering processing for the next customer.

### Description of Flow of Process Performed by Accounting Device

Next, by using FIG. 7, a flow of a process performed by the accounting device 20a (to which the commodity registration information was transferred) will be described.

The registration information receiving unit 54 determines whether the commodity registration information has been received from the POS terminal 10 (Act 30). When it is determined that the commodity registration information has been received (Act 30: Yes), the process proceeds to Act 32. If it is not determined that the commodity registration information has been received (Act 30: No), the determination in Act 30 is repeated until a time-out occurs.

Once it is determined Yes in Act 30, the operation managing unit 56 checks in Act 32 whether there has been a settlement instruction. When it is determined that there has been a settlement instruction (Act 32: Yes), the process proceeds to Act 34. If it is not determined that there has been a settlement instruction (Act 32: No), the determination in Act 32 is repeated until time-out occurs.

Once it is determined as Yes in Act 32, the accounting unit 53 performs the settlement accounting in Act 34. The processing returns to Act 30, so accounting for the next customer can be performed if necessary.

### Description of Another Example for Indicating A Transfer Destination

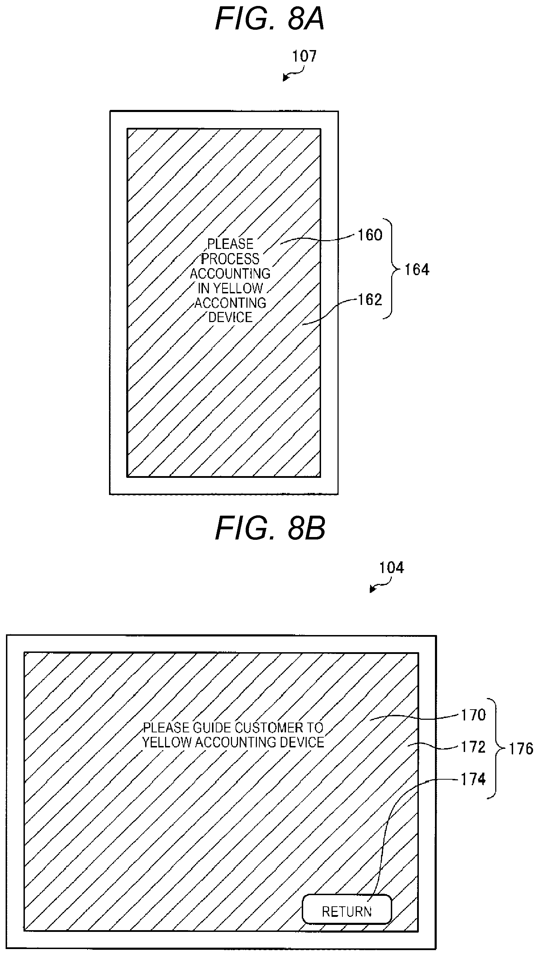

Next, by using FIGS. 8A and 8B, another example for a case where the transfer destination presenting unit 155 of the POS terminal 10 presents the color corresponding to the color name read from the reference file F3 will be described. FIGS. 8A and 8B are diagrams illustrating another example of presenting the transfer destination to the customer (C2) and the operator (0) FIG. 8A is a diagram illustrating an example of a display screen 164 of the customer side monitor 107. FIG. 8B is a diagram illustrating an example of a display screen 176 of the operator side monitor 104.

As illustrated in FIG. 8A, the transfer destination presenting unit 155 causes the display screen 164 to be displayed on the customer side monitor 107, instead of the turning on of the LED 108. Accordingly, as illustrated in FIG. 8B, the transfer destination presenting unit 155 causes the display screen 176 to be displayed on the operator side monitor 104. The display screen 164 and the display screen 176 are displayed at the same time.

The display screen 164 includes a sentence (message) 160 and a background 162. As an example, the message 160 includes the color name ("YELLOW") assigned to the accounting device 20a to which the commodity registration information has been transferred. Additionally, the background 162 is filled with the color assigned to the accounting device 20a.

The display screen 176 includes a sentence (message) 170, a background 172, and a return button 174. As an example, the message 170 includes the color name ("YELLOW") assigned to, the accounting device 20a to which the commodity registration information has been transferred. Additionally, the background 172 is filled with the color assigned to the accounting device 20a. The return button 174 is a button for returning to the previous display state of display screen 164 and the display screen 176 or otherwise resetting the display states of the display screen 164 and the display screen 176. As described in the above-described embodiment, although the display screens 164 and 176 may be automatically deleted when a predetermined time elapses or the next customer starts the registering, , it is also possible for operator O to manually reset the display screens 164 and 176 at an arbitrary timing by pressing the return button 174.

In general, the operator O confirms that the correct display screen 176 is displayed, and directs the customer C2 to perform the settlement accounting at the accounting device 20a, 20b, 20c matching color displayed on the display screens 164 and 176.

The customer C2 compares the color of the background 162 and the painted (or the like) color of the case 25 of the accounting devices 20a, 20b, and 20c, and searches for the accounting device (here, "yellow' accounting device 20a) which has its case 25 painted with same color matching that of the background 162 on the display screen 164. Accordingly, the customer C2 recognizes that the settlement accounting is to be performed at accounting device 20a.

In addition to making the entirety of background 162 the color that has been assigned to the accounting device 20a, in some examples only some portion of the background 162 may be the color assigned to the accounting device 20a. Similarly, in some examples, only some of the background 172 may be the color assigned to the accounting device 20a. Furthermore, the turning on of the LED 108 with the assigned color and making the display on the display screen 164 and the display screen 176 match the assigned color can be performed at the same time.

As described above, in the POS terminal 10 of an embodiment, the registering unit 153 performs registration of the commodity being purchased by the customer C2, and the registration information transferring unit 154 transfers the commodity registration information for the sales transaction to one of the accounting devices 20a, 20b, and 20c, which are each assigned a different colors and painted or otherwise decorated with their respective assigned colors. Accordingly, the transfer destination presenting unit 155 presents, to the customer, the color assigned to the one of accounting devices 20a, 20b, and 20c to which the registered result is being transferred. Therefore, as compared with a case of searching for the assigned accounting device by merely comparing a color name with an actual color of the accounting device or a case of searching for the assigned accounting device based numbering or symbols, the customer can search more easily for the assigned accounting device. Particularly, since the customer can compare the actual color attached to the accounting devices 20a, 20b, and 20c with the color presented by the transfer destination presenting unit 155, it is possible to search for the assigned accounting device even if the customer has a color vision disorder.

In addition, in the POS terminal 10 of an embodiment, the transfer destination presenting unit 155 turns on the LED 108 or other lighting device included in the POS terminal 10 with a color matching to the color assigned to the assigned one of accounting devices 20a, 20b, and 20c to which the commodity registered result is being transferred. Therefore, a customer can easily search for the assigned accounting device by comparing the respective color attached to the accounting devices 20a, 20b, and 20c with the color presented by the transfer destination presenting unit 155.

In addition, in the POS terminal 10 of an embodiment, the LED 108 is installed to be viewable by both the customer C2 and the operator O. Therefore, since both the customer C2 and the operator O can see the emission color of the LED 108, the operator O can guide customer C2 to the correct one of accounting devices 20a, 20b, and 20c.

In addition, in the POS terminal 10 of an embodiment, the transfer destination presenting unit 155 causes a color assigned to the one of accounting devices 20a, 20b, and 20c to which the commodity registered result is transferred, to be displayed on the customer side monitor 107 and the operator side monitor 104 included in the POS terminal 10. Therefore, the customer C2 compares the color presented by the transfer destination presenting unit 155 with the color of the case 25 of the accounting devices 20a, 20b, and 20c such that it is possible to easily identify the correct accounting device at which to perform settlement accounting.

In addition, in the POS terminal 10 of an embodiment, the transfer destination presenting unit 155 ends the presentation of a color when a predetermined time is elapsed from start of the presentation of the color or the registering unit 153 begins a registration for a commodity being purchased by the next customer. Therefore, it is possible to continue the presentation of color while the customer C2 searches for the correct/assigned accounting device.

In some examples, the control program P1 or control program P2 executed by the control unit 150 or the control unit 50, respectively, may be stored in the HDD 136 (or HDD 36) or may be recorded in a non-transitory computer-readable recording medium such as a CD-ROM, a flexible disk (FD), a CD-R, and a digital versatile disk (DVD) as a file in an installable format or an executable format. In addition, in some examples, the control program P1 and/or control program P2 may be provided by being downloaded via a network b. Furthermore, the control program P1 and/or control program P2 may be provided or distributed via a network such as the Internet.

While certain embodiments have been described, these embodiments have been presented by way of example only, and are not intended to limit the scope of the present disclosure. Indeed, the novel methods and systems described herein may be embodied in a variety of other forms; furthermore, various omissions, substitutions, and changes in the form of the methods and systems described herein may be made without departing from the spirit of the present invention as defined by the appended claims. The accompanying claims and their equivalents are intended to cover such forms or modifications as would fall within the scope of the present disclosure as defined by the appended claims.

## Claims

1. A point-of-sale terminal in a checkout system including a plurality of transaction settlement accounting devices separate from the point-of-sale terminal, the point-of-sale terminal comprising:
a scanner to identify and register an item being purchased by a customer in a sales transaction and generate sales transaction information including each registered item identified by the scanner;
a communication interface for transferring sales transaction information to a plurality of transaction settlement accounting devices, each transaction settlement accounting device being of an assigned color that is different for each other transaction settlement accounting device in the plurality; and
a visual display device for presenting a color to the customer that matches the assigned color of a selected one of the plurality of transaction settlement accounting devices to which the sales transaction information for the customer is transferred.

2. The point-of-sale terminal according to claim 1, wherein the visual display device comprises a lighting device on the point-of-sale terminal that can emit light at a color substantially matching each assigned color of the plurality transaction settlement accounting devices, and configured to emit light substantially matching the assigned color of the selected one of the plurality of transaction settlement accounting devices after the communication interface transfers the sales transaction information.

3. The point-of-sale terminal according to claim 2, wherein the lighting device is an LED device in a position visible by both the customer and an operator of the scanner.

4. The point-of-sale terminal according to claim 2 or 3, wherein the lighting device is disposed on a pole adjacent to the scanner.

5. The point-of-sale terminal according to any of claims 1 to 4, wherein
the visual display device comprises a first display screen directed towards a customer side of the scanner and a second display screen directed toward an operator side of the scanner, and
the assigned color of the selected one of the transaction settlement devices is displayed on the first display screen and the second display screen after the sales transaction information is transferred.

6. The point-of-sale terminal according to claim 5, wherein an entirety of a background portion of the first display screen and an entirety of a background portion of the second display screen displays the assigned color of the selected one of the transaction settlement devices.

7. The point-of-sale terminal according to claim 5 or 6, wherein
the visual display device further comprises a lighting device that can emit light at a color substantially matching each assigned color of the plurality transaction settlement accounting devices and is configured to emit light substantially matching the assigned color of the selected one of the plurality of transaction settlement accounting devices after the communication interface transfers the sales transaction information.

8. The point-of-sale terminal according to any of claims 2 to 7, wherein the lighting device is an LED device in a position visible by both the customer and an operator of the scanner.

9. The point-of-sale terminal according to claim 7, wherein the lighting device is disposed on a pole adjacent to the scanner.

10. The point-of-sale terminal according to any of claims 1 to 9, further comprising:
an operator display screen including a touch panel, wherein
selection of the selected one of the plurality of transaction settlement accounting devices is made by an operator via the touch panel.

11. A checkout system, comprising:
a point-of-sale terminal at which an operator registers items in a sales transaction for a customer; and
a plurality of transaction settlement accounting devices separate from the point-of-sale terminal, configured to permit the customer to settle the sales transaction by one or more methods of payment, each transaction settlement accounting device being assigned a different color, and each transaction settlement accounting device being predominately painted with its respective assigned color, wherein
the point-of-sale terminal includes
a scanner to identify and register an item being purchased by the customer and generate sales transaction information including each registered item identified by the scanner;
a communication interface for transferring sales transaction information to the plurality of transaction settlement accounting devices; and
a visual display device for presenting a color to the customer that matches the assigned color of a selected one of the plurality of transaction settlement accounting devices to which the sales transaction information for the customer is transferred.

12. The checkout system according to claim 11, wherein the visual display device comprises a lighting device on the point-of-sale terminal that can emit light at a color substantially matching each assigned color of the plurality transaction settlement accounting devices, and configured to emit light substantially matching the assigned color of the selected one of the plurality of transaction settlement accounting devices after the communication interface transfers the sales transaction information.

13. The checkout system according to claim 12, wherein the lighting device is an LED device in a position on the point-of-sale terminal visible by both the customer and the operator of the point-of-sale terminal.

14. The checkout system according to claim 12, wherein the lighting device is disposed on a pole attached to the point-of-sale terminal.

15. A commodity sales data registration method, comprising:
performing registration of a commodity being purchased by a customer at point-of-sale terminal and thereby generating sales transaction information;
transferring the sales transaction information to a selected transaction settlement accounting device from a plurality of transaction settlement accounting devices communicably connected to the point-of-sale terminal, each of the transaction settlement accounting devices being assigned a different color; and
visually presenting the color assigned to the selected one of the transaction settlement accounting devices to the customer.
